# FASCICULE DE BREVET EUROPEEN

(11) **EP 3 687 846 B1**
(45) Date de publication et mention de la délivrance du brevet: **30.04.2025**
(21) Numéro de dépôt: 18773193.0
(22) Date de dépôt: 25.09.2018
(51) Int. Cl.: B60J 10/265, B60J 10/36

(54) **FIXATION D'UN ENJOLIVEUR SUR JOINT DE VITRAGE**
BEFESTIGUNGSELEMENT EINER ZIERLEISTE AN EINER SCHEIBENDICHTUNG
MOUNTINGDEVICE FOR ORNAMENTAL PROFILE ON WINDOW PANE SEAL

(30) Priorité: 28.09.2017 EP 17193854
(43) Date de publication de la demande: 05.08.2020
(73) Titulaire: AGC Glass Europe, 1348 Louvain-La-Neuve (BE)
(72) Inventeur: CARNOY, Xavier, 4890 Thimister-Clermont (BE); BEKAERT, Frank, 1367 Ramillies (BE); HICK, Robert, 4032 Chênée (BE); GLADY, Joël, 1348 Louvain-La-Neuve (BE)
(74) Mandataire: AGC Glass Europe
(86) Numéro de dépôt international: PCT/EP2018/076000
(87) Numéro de publication internationale: WO 2019/063563

(56) Documents cités:
- EP-A2- 0 117 816
- WO-A1-2010/094258
- BE-B1- 1 021 716
- DE-A1- 3 413 003
- DE-C2- 3 413 003
- FR-A1- 2 577 483
- US-A- 4 950 019

## Description

L'invention concerne la fixation d'un enjoliveur sur un joint disposé à la périphérie d'un vitrage monté sur la carrosserie d'un véhicule.

Les vitrages fixes montés dans les baies de carrosserie comportent très usuellement un joint disposé à leur périphérie qui assure l'étanchéité et évite le contact verre/métal. Le collage du vitrage dans la baie est aussi effectué par l'intermédiaire du joint.

Les constructeurs dissimulent souvent ces joints peu esthétiques derrière des enjoliveurs métalliques ou de matériau synthétique revêtu d'un film métallique. Ces enjoliveurs doivent être fixés de manière suffisamment résistante pour ne pas risquer de se détacher accidentellement. Ils doivent aussi pouvoir être désolidarisés par exemple à l'occasion de travaux de ou lors d'un remplacement de l'enjoliveur en cas de défaut de celui-ci, ne nécessitant pas un remplacement du vitrage complet peinture effectués sur le véhicule.

Divers modes de fixation ont été proposés pour ces enjoliveurs, modes qui souvent impliquent une liaison entre le joint et l'enjoliveur. Le plus souvent ces fixations se font par l'intermédiaire de moyens de type clips pour la simplicité et la rapidité de mise en place. Dans ces assemblages l'enjoliveur qui est constitué essentiellement d'un profilé métallique vient se fixer sur une pièce incorporée dans le joint lui-même. La mise en place des divers éléments nécessite souvent une ou plusieurs opérations qui ne peuvent être effectuées que manuellement ce qui n'est pas satisfaisant du point de vue économique. Pour simplifier ces opérations des solutions ont recours à des modes de fixation comportant le clipsage du profilé constituant l'enjoliveur sur un élément correspondant, intégré dans le joint périphérique dès la formation de celui-ci sur le vitrage. Notamment, il a été proposé dans la demande de brevet belge BE 2013/0441, une fixation d'enjoliveur comprenant deux éléments distincts, le premier élément étant une base qui est moulée directement avec le joint et le second comprenant les pinces destinées à recevoir le tenon de l'enjoliveur. Le second élément est quant à lui assemblé à la base par un engagement des deux éléments l'un par rapport à l'autre dans un mouvement s'opposant à la séparation des deux éléments. Cette solution présente l'avantage de pouvoir remplacer le deuxième élément si celui-ci est défectueux. Cependant, cette solution conduit à la formation de retassures au niveau du joint lorsque l'élément de fixation est placé.

Ainsi, pour répondre à ce problème de retassures et d'encombrement spatial, l'invention propose un élément de fixation (100) d'un enjoliveur (1) sur un joint périphérique (10) d'un vitrage (11) d'un véhicule comprenant au moins un assemblage de type clips constitué d'une base (6) portant sur la face destinée à recevoir l'enjoliveur, une ou plusieurs pinces semi-rigides (7), lesdites pinces comprenant aux moins deux branches entre lesquelles est introduit un élément tenon(4) de l'enjoliveur.

Selon l'invention, l'élément de fixation (100) est formé d'une seule pièce, comprenant la base (6) et une ou plusieurs pinces semi-rigides (7), qui est solidaire du joint périphérique au cours du moulage de celui-ci sur le vitrage.

Selon l'invention, la une ou plusieurs pinces semi-rigides (7) l'élément de fixation constitue la partie de l'élément de fixation dans laquelle l'enjoliveur sera clipsé. L'enjoliveur est rapporté après formation du joint.

Les joints qui comportent les éléments participant à cette fixation, sont formés directement sur le vitrage par moulage. On désigne l'opération sous le nom d'encapsulation. Le moulage direct des joints ainsi que de l'élément de fixation de l'enjoliveur sur le vitrage présente l'avantage de simplifier le procéder de montage de l'élément de fixation ainsi que de l'enjoliveur mais surtout de diminuer l'encombrement de cet élément de fixation tout en réduisant le phénomène de retassures.

Selon l'invention, les branches des pinces assurent la liaison de nature mécanique avec l'enjoliveur. La mise en place de l'enjoliveur par insertion du tenon entre les branches de la ou les pinces complète l'opération en interdisant le mouvement qui permettrait la séparation des deux éléments.

Dans la suite, la partie de l'élément de fixation incorporé dans le joint est désigné sous le nom de base, et la partie comprenant les branches des pinces, les pinces. Ces deux éléments selon l'invention forme une unique pièce qui est moulé directement sur le vitrage sur le joint périphérique.

L'invention est décrite de manière détaillée en faisant référence aux figures dans lesquelles :
- la figure 1 présente en coupe le mode de fixation par clipsage selon l'invention ;
- la figure 2 présente en perspective le vitrage avec l'élément de clipsage incorporé dans le joint d'encapsulation ;

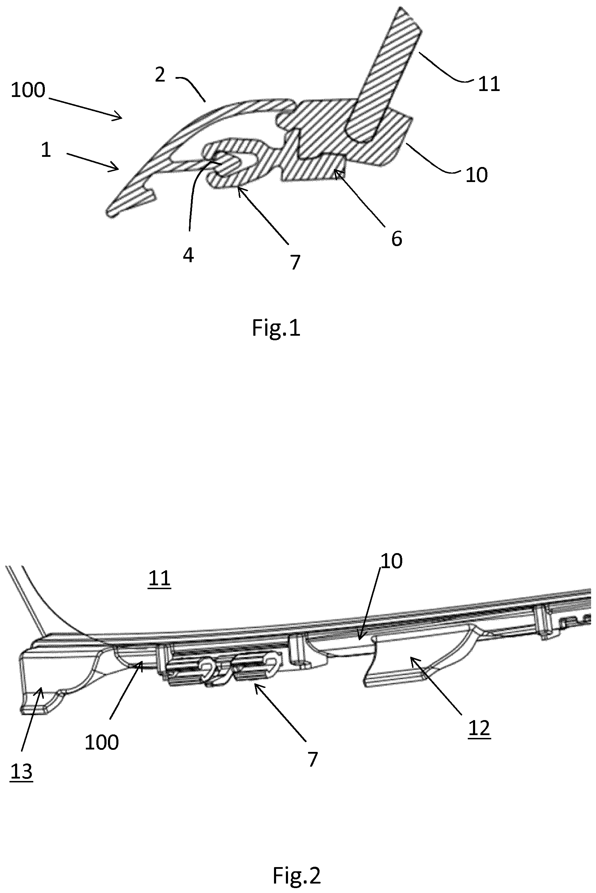

- La figure 1 montre en coupe de façon schématique le mode d'assemblage par clipsage. Dans cette représentation l'enjoliveur 1 présente une surface extérieure 2 destinée à dissimuler le joint d'encapsulation 10 du vitrage 11. Sur sa face tournée vers le joint, l'enjoliveur comporte un tenon 4. Selon l'invention, l'élément fixation est en plastique de type ABS-PC réalisé au moyen d'un procédé d'injection par moulage. La matière utilisée doit présenter une flexibilité suffisante pour assurer la fonction de clipsage, ainsi qu'une adhésion avec, selon l'invention, la matière plastique de type TPE ou PVC d'encapsulation.

L'élément de fixation comprend une base 6 laquelle est prise dans le joint lors du moulage de celui-ci. L'élément de fixation comprend aussi une pince 7 destinée à recevoir de manière semi-rigide le tenon 4 de l'enjoliveur 1. La pince 7 est solidaire de la base 6 et constitue ainsi une pièce unique comprenant la base 6 et la pince 7.

La figure 2 montre une disposition du mode de fixation dans le joint 10 du bord du vitrage 11 pour ce mode d'assemblage par encapsulation. L'enjoliveur, non représenté, est mis en place après l'assemblage en question.

L'élément de fixation comme représenté à la figure 2, est pris dans le joint 10 au cours de son moulage sur le vitrage. Seule la face supérieure de la base 6 comprenant les pinces 7 émerge hors du joint 10 le reste est pris dans le joint. Les pinces 7 se trouvent à l'extérieur du joint 10.

Le joint 10 de la figure 2 présente une cale 12 sur laquelle le bord de l'enjoliveur repose pour prévenir le contact avec la carrosserie du véhicule, et une butée d'extrémité 13 qui se situe à l'extrémité dans la longueur de l'enjoliveur. La cale 12 et la butée 13 sont produites avec le corps principal du joint par moulage.

Comme représenté à la figure 2, la base 6 est constituée d'un corps de forme allongée et de dimensions telles qu'elles permettent l'incorporation dans le joint au cours du moulage. Ainsi, l'insertion dans le joint se fait de manière aisée et répétable dans le moule d'encapsulation. Sur la face de la base 6 non prise dans le joint, se trouvent les pinces 7.
Les vitrages concernés sont souvent de forme légèrement incurvées, et le positionnement des bases 6 dans le joint 10 peut ne pas être rigoureusement dans l'alignement de la partie du tenon qui leur fait face. La présence de deux pinces 7 permet de compenser certains écarts de positionnement. Le tenon 4 qui présente une forme globalement complémentaire de l'espace existant entre les deux branches des pinces 7, avantageusement ne le remplit pas nécessairement de manière complète. L'espace en question est de préférence légèrement plus volumineux que l'extrémité du tenon 4. Pour éviter que ce jeu ne soit préjudiciable au maintien en position de l'enjoliveur, un doigt de guidage qui permet principalement de guider le tenon 4 de l'enjoliveur vers les pinces est prévu. Ce doigt de guidage peut être disposé entre les deux pinces 7. Cette cale s'avance légèrement par rapport au fond de l'espace entre les pinces de telle sorte que la pointe du tenon repose sur le fond de cette cale maintenant les hanches du tenon 4 contre les branches des pinces 7 en jouant de l'élasticité relative de ces pinces.

## Revendications

1. Elément de fixation (100) d'un enjoliveur (1) sur un joint périphérique (10) d'un vitrage (11) d'un véhicule comprenant au moins un assemblage de type clips constitué d'une base (6) portant sur la face destinée à recevoir l'enjoliveur, une ou plusieurs pinces semi-rigides (7), lesdites pinces comprenant aux moins deux branches entre lesquelles est introduit un élément tenon (4) de l'enjoliveur, le vitrage est incurvé et un doigt de guidage qui permet principalement de guider le tenon (4) de l'enjoliveur vers les pinces est prévu et le doigt de guidage peut être disposé entre les deux pinces, **caractérisé en ce que** l'élément de fixation (100) est constitué d'une seule pièce, comprenant la base (6) et d'au moins deux pinces semi-rigides (7), qui est solidaire du joint périphérique au cours du moulage de celui-ci sur le vitrage, l'élément de fixation est en plastique de type ABS-PC réalisé au moyen d'un procédé d'injection par moulage et le joint périphérique (10) est en plastique de type TPE ou PVC.

2. Elément de fixation selon la revendication 1 dans lequel la base (6) et les pinces semi-rigides (7) sont composés d'un même matériau.

3. Elément de fixation (100) selon la revendication 1 **caractérisé en ce qu'**il est fixé au joint périphérique (10) du vitrage par encapsulation.

4. Elément de fixation (100) selon la revendication 1 **caractérisé en ce que** les branches des pinces semi-rigides (17) comprennent du Polycarbonate/Acrylonitrile Butadiène Styrène (PC-ABS).

## Patentansprüche

1. Befestigungselement (100) einer Zierleiste (1) an einer umlaufenden Dichtung (10) einer Scheibe (11) eines Fahrzeugs, das mindestens eine clipsartige Verbindung aufweist, die aus einer Basis (6) besteht, die auf der Seite, die dazu bestimmt ist, die Zierleiste aufzunehmen, eine oder mehrere halbstarre Klammern (7) trägt, wobei die Klammern mindestens zwei Schenkel aufweisen, zwischen denen ein Zapfenelement (4) der Zierleiste eingeführt ist, wobei die Verglasung gekrümmt ist und ein Führungsfinger, der es hauptsächlich ermöglicht, den Zapfen (4) der Zierleiste zu den Klammern zu führen, vorgesehen ist und der Führungsfinger zwischen den beiden Klammern angeordnet sein kann, **dadurch gekennzeichnet, dass** das Befestigungselement (100) aus einem einzigen Stück besteht, das die Basis (6) und mindestens zwei halbstarre Klammern (7) aufweist, und mit der Umfangsdichtung während des Formens derselben auf der Verglasung fest verbunden ist, das Befestigungselement aus einem Kunststoff vom Typ ABS-PC besteht, der mittels eines Spritzgussverfahrens durch Formgebung hergestellt wird, und die umlaufende Dichtung (10) aus einem Kunststoff vom Typ TPE oder PVC besteht.

2. Befestigungselement nach Anspruch 1, wobei die Basis (6) und die halbstarren Klammern (7) aus demselben Material bestehen.

3. Befestigungselement (100) nach Anspruch 1, **dadurch gekennzeichnet, dass** es an der umlaufenden Dichtung (10) der Scheibe durch Einkapselung befestigt ist.

4. Befestigungselement (100) nach Anspruch 1, **dadurch gekennzeichnet, dass** die Schenkel der halbstarren Klammern (17) Polycarbonat/Acrylnitril-Butadien-Styrol (PC-ABS) aufweisen.

## Claims

1. Element (100) for fastening a trim (1) to a peripheral seal (10) of a window (11) of a vehicle, comprising at least one clip-type assembly constituted by a base (6) bearing, on the face designed to receive the trim, one or more semi-rigid clips (7), said clips comprising at least two arms between which a lug element (4) of the trim is inserted, the window is curved and a guide finger, which principally makes it possible to guide the lug (4) of the trim towards the clips, is provided, and the guide finger may be arranged between the two clips, **characterized in that** the fastening element (100) is constituted as a single component, comprising the base (6) and at least two semi-rigid clips (7), which is integrated with the peripheral seal during moulding of the latter on the window, the fastening element is made from plastics of ABS-PC type, produced using an injection-moulding process, and the peripheral seal (10) is made from plastics of TPE or PVC type.

2. Fastening element according to Claim 1, wherein the base (6) and the semi-rigid clips (7) are composed of one and the same material.

3. Fastening element (100) according to Claim 1, **characterized in that** it is fastened to the peripheral seal (10) of the window by encapsulation.

4. Fastening element (100) according to Claim 1, **characterized in that** the arms of the semi-rigid clips (17) comprise polycarbonate/acrylonitrile/butadiene styrene (PC-ABS).
